# EUROPEAN PATENT APPLICATION

(11) **EP 2 363 767 A1**
(43) Date of publication of application: **07.09.2011**
(21) Application number: 11155210.5
(22) Date of filing: 21.02.2011
(51) Int. Cl.: G05B 15/02

(54) **Process analysis system**

(30) Priority: 24.02.2010 JP 2010038772
(71) Applicant: Yokogawa Electric Corporation, Musashino-shi Tokyo 180-8750 (JP)
(72) Inventor: Yokegawa, Sachiko, Tokyo 180-8750 (JP); Susumago, Mitsutoshi, Tokyo 180-8750 (JP)
(74) Representative: Henkel, Breuer & Partner

(57) **Abstract**

A process analysis system may include a data collecting unit that collects process data related to a plant, an input unit that receives an analysis logic, a first analyzing unit that performs a first analysis of the process data by using the analysis logic, a storage unit that stores the analysis logic, which has been used by the first analyzing unit, so as to be reused by the first analyzing unit, and a first display control unit that controls a display unit, the display unit displaying a group of screen images of a first analysis result of the first analysis so that the input unit can receive an instruction of performing a series of operations. The series of operations may be performed by the data collecting unit, the input unit, the first analyzing unit, the storage unit, and the display unit based on the instruction to at least one of the group of screen images.

## Description

### BACKGROUND OF THE INVENTION

### Field of the Invention

The present invention relates to a process analysis system that analyzes a process by analyzing process data of a plant based on a predetermined analysis logic.

Priority is claimed on Japanese Patent Application No. 2010-038772, filed February 24,2010, the content of which is incorporated herein by reference.

### Description of the Related Art

All patents, patent applications, patent publication, scientific articles, and the like, which will hereinafter be cited or identified in the present application, will hereby be incorporated by reference in their entirety in order to describe more fully the state of the art to which the present invention pertains.

In a case where a production process of a plant is analyzed by using process data, an analysis result may be obtained through a plurality of analysis processes such as acquisition of process data, definition of an analysis logic, execution of the analysis based on the defined, analysis logic, or the like. For this reason, the analyzing work is usually performed by using a plurality of software such as a multi-variable analysis tool, an elementary statistics tool, a visualizing tool, or the like.

In a conventional analyzing work, a plurality of tools is used in combination. Since the processes of the tools are not connected with each other, the analyzing work takes a lot of time and effort. Since a plurality of tools is used, the analysis process cannot be preserved in order in a system. For this reason, the analysis process remains only in a memory of an analyzer. Thus, the analysis process cannot be reused or passed on. In the operation of a plant, many staffs of a plurality of roles and departments are interrelated. However, there is no configuration that allows the sharing of analysis results among the plurality of roles and departments.

### SUMMARY

A process analysis system may include a data collecting unit that collects process data related to a plant, an input unit that receives an analysis logic, a first analyzing unit that performs a first analysis of the process data by using the analysis logic, a storage unit that stores the analysis logic, which has been used by the first analyzing unit, so as to be reused by the first analyzing unit, and a first display control unit that controls a display unit, the display unit displaying a group of screen images of a first analysis result of the first analysis so that the input unit can receive an instruction of performing a series of operations. The series of operations may be performed by the data collecting unit, the input unit, the first analyzing unit, the storage unit, and the display unit based on the instruction to at least one of the group of screen images.

A process analysis system may include a data collecting unit configured to collect process data related to a plant, a mapping unit configured to convert data format data pattern and data status of each piece of the process data collected by the data collecting unit, the data format, the data pattern and the data status being determined by the process analysis system, the mapping unit generating converted process data, a cleansing unit configured to perform data cleansing of the converted process data to generate cleansed process data, a input unit configured to receive an analysis logic, a first analyzing unit configured to perform a first analysis of the cleansed process data by using the analysis logic, a storage unit configured to store the analysis logic, which has been used by the first analyzing unit, so as to be reused by the first analyzing unit, a display unit configured to display a group of screen images of a first analysis result of the first analysis so that the input unit can receive a first instruction of performing a series of operations, a first display control unit configured to control the display unit. The series of operations may be performed by the data collecting unit, the input unit, the first analyzing unit, the storage unit, and the display unit based on the first instruction.

A process analysis method may include collecting process data of a plant, receiving an analysis logic, performing an analysis of the process data by using the analysis logic, storing the analysis logic, which has been used in the analysis, so as to be reused in a next analysis, and displaying a group of screens of an analysis result of the analysis so that an instruction of performing a series of operations can be received. The series of operations may be performed based on the instruction to at least one of the group of screens.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram illustrating a process analysis system in accordance with a first preferred embodiment of the present invention;
FIG. 2 is a flowchart illustrating a flow of works in the process analysis in accordance with the first preferred embodiment of the present invention;
FIG. 3A is a view illustrating an example of an "analyzer client screen" used when extracting a problem;
FIG. 3B is a view illustrating an example of the "analyzer client screen" used when extracting a problem;
FIG. 4 is a view illustrating an example of a display screen of a tab sheet of "historical view";
FIG. 5 is a view illustrating an example of a display screen of a tab sheet of "data extraction";
FIG. 6 is a view illustrating an example of a display screen of a tab sheet of "data cleansing";
FIG. 7 is a view illustrating an example of a display screen of a tab sheet of "data profiling";
FIG 8 is a view illustrating an example of a display screen of a tab sheet of "problem detection";
FIG. 9 is a view illustrating an example of a display screen of a tab sheet of "cause analysis";
FIG. 10 is a block diagram illustrating an example where an analyzing function is provided to the manipulation monitoring device;
FIG. 11A is a view illustrating an example of a display screen that shows an analysis result display screen;
FIG. 11B is a view illustrating an example of a display screen that shows a KPI (Key Performance Indicator) operation definition screen;
FIG. 11C is a view illustrating an example of a display screen that shows an MT analysis definition screen;
FIG. 11D is a view illustrating an example of a display screen that shows a status conversion definition screen;
FIG. 12A is a graph illustrating an example of an analysis result of a MT method;
FIG. 12B is a graph illustrating an example of an analysis result of the MT method; and
FIG. 13 is a view illustrating a correlation between data structure of a software sensor and an analysis logic.

### DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

A process analysis system may include a data collecting unit that collects process data related to a plant, an input unit that receives an analysis logic, a first analyzing unit that performs a first analysis of the process data by using the analysis logic, a storage unit that stores the analysis logic, which has been used by the first analyzing unit, so as to be reused by the first analyzing unit, and a first display control unit that controls a display unit, the display unit displaying a group of screen images of a first analysis result of the first analysis so that the input unit can receive an instruction of performing a series of operations. The series of operations may be performed by the data collecting unit, the input unit, the first analyzing unit, the storage unit, and the display unit based on the instruction to at least one of the group of screen images.

The process analysis system may further include a control unit that controls the data collecting unit, the input unit, the first analyzing unit, the storage unit, and the first display control unit, the control unit controlling the series of operations.

The storage unit may store the first analysis result so as to be reused by the first analyzing unit.

The series of operations may be performed by using the same process data or the same group of process data.

The process analysis system may further include a data cleansing unit that performs a data cleansing of the process data to generate cleansed process data. The first analyzing unit may perform the first analysis of the cleansed process data. The data cleansing may be performed based on the instruction to at least one of the group of screen images.

The process analysis system may further include a data formatting unit that performs a data formatting of the process data to generate formatted process data, the data formatting unifying a data format of the process data. The first analyzing unit may perform the first analysis of the formatted process data. The data formatting may be performed based on the instruction to at least one of the group of screen images.

The process analysis system may further include a manipulation monitoring device that receives the process data from the plant, the manipulation monitoring device receiving the analysis logic stored in the storage unit. The manipulation monitoring device may include a second analyzing unit that performs a second analysis of the process data based on the analysis logic, and a second display control unit that controls a display of a second analysis result of the second analysis.

The analysis logic may include the Mahalanobis-Taguchi (MT) method.

A process analysis system may include a data collecting unit configured to collect process data related to a plant, a mapping unit configured to convert data format, data pattern and data status of each piece of the process data collected by the data collecting unit, the data format, the data pattern and the data status being determined by the process analysis system, the mapping unit generating converted process data, a cleansing unit configured to perform data cleansing of the converted process data to generate cleansed process data, a input unit configured to receive an analysis logic, a first analyzing unit configured to perform a first analysis of the cleansed process data by using the analysis logic, a storage unit configured to store the analysis logic, which has been used by the first analyzing unit, so as to be reused by the first analyzing unit, a display unit configured to display a group of screen images of a first analysis result of the first analysis so that the input unit can receive a first instruction of performing a series of operations, a first display control unit configured to control the display unit. The series of operations may be performed by the data collecting unit, the input unit, the first analyzing unit, the storage unit, and the display unit based on the first instruction.

The process analysis system may further include a control unit configured to control the data collecting unit, the analyzing unit, the input unit, the storage unit, and the display control unit. The control unit may control the series of operations.

The data cleansing may be performed based on a second instruction received by the input unit.

The process analysis system may further include a manipulation monitoring device that receives the process data related to the plant, the manipulation monitoring device receiving the analysis logic stored in the storage unit. The manipulation monitoring device may include a second analyzing unit configured to perform a second analysis of the process data based on the analysis logic, and a second display control unit configured to control a display of a second analysis result of the second analysis.

The first analyzing unit and the second analyzing unit may have a first function. The first display control unit and the second display control unit may have a second function.

The analysis logic may include the Mahalanobis-Taguchi (MT) method.

A process analysis method may include collecting process data of a plant, receiving an analysis logic, performing an analysis of the process data by using the analysis logic, storing the analysis logic, which has been used in the analysis, so as to be reused in a next analysis, and displaying a group of screens of an analysis result of the analysis so that an instruction of performing a series of operations can be received. The series of operations may be performed based on the instruction to at least one of the group of screens.

The process analysis method may further include storing the analysis result so as to be reused in the next analysis.

The series of operations may be performed by using the same process data or the same group of process data.

The process analysis method may further include performing a data cleansing of the process data to generate cleansed process data. The analysis may be performed on the cleansed process data. The data cleansing may be performed based on the instruction to at least one of the group of screens.

The process analysis method may further include performing a data formatting of the process data to generate formatted process data, the data formatting unifying a data format of the process data. The analysis may be performed on the formatted process data. The data formatting may be performed based on the instruction to at least one of the group of screens.

The analysis logic may include the Mahalanobis-Taguchi (MT) method.

The process analysis system in accordance with the present invention decreases the burden of the analyzing work and allows effective use of analysis results.

In the process analysis system in accordance with the present invention, a series of processes are instructed in response to a manipulation of one of a group of analysis screens, which are developed and displayed with each other by a display unit. Thus, a burden of the analyzing work may be decreased. The analysis logic is preserved in a reusable state. Thus, the analysis result may be used effectively.

Hereinafter, a process analysis system in accordance with a first preferred embodiment of the present invention, which is applied to a plant control system, will be described.

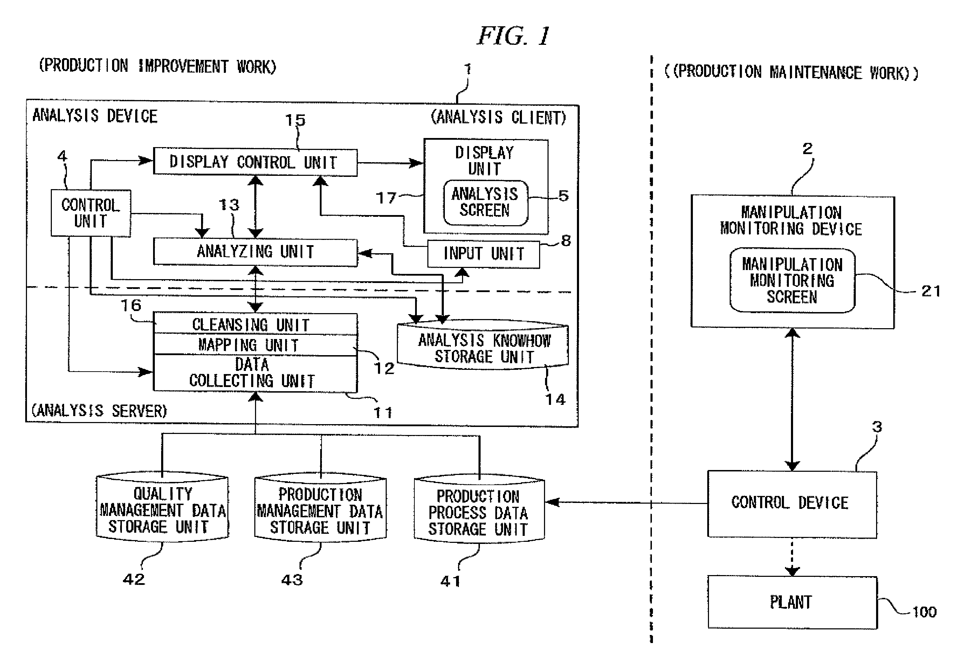

FIG 1 is a block diagram illustrating a process analysis system in accordance with the first preferred embodiment of the present invention. The process analysis system includes an analysis device 1, a manipulation monitoring device 2, a control device 3, a production process data storage unit 41, a quality management data storage unit 42, and a production management data storage unit 43. The analysis device 1, the production process data storage unit 41, the quality management data storage unit 42, and the production management data storage unit 43 are used for performing production improvement work. The manipulation monitoring device 2 and the control device 3 are used for performing the production maintenance work.

The control device 3 is a distributed control system that controls a plant 100 by means of a plurality of field controllers, which are not illustrated in the figure. The plurality of field controllers are distributed and arranged in the plant 100. The manipulation monitoring device 2 is connected to the control device 3 to manipulate and monitor the plant 100. An operator of the production maintenance work manipulates and monitors the plant through a manipulation monitoring screen 21 included in the manipulation monitoring device 2.

The control device 3 receives process data from the plant 100 to control the plant 100. The production process data storage unit 41 receives the process data of the plant 100 through the control device 3 to store the process data. The quality management data storage unit 42 receives quality management data of the plant 100 through the control device 3 to store the quality management data. The production management data storage unit 43 receives production management data of the plant 100 through the control device 3 to store the production management data.

The analysis device 1 performs a process analysis based on the process data. An operator of the production improvement work analyzes a process by using the analysis device 1.

The analysis device 1 includes a control unit 4, an analysis screen 5, an input unit 8, a data collecting unit 11, a mapping unit 12, an analyzing unit 13, an analysis knowhow storage unit 14, a display control unit 15, a cleansing unit 16, and a display unit 17. The control unit 4 controls the analysis screen 5, the input unit 8, the data collecting unit 11, the analyzing unit 13, the analysis knowhow storage unit 14, and the display control unit 15.

The data collecting unit 11 collects history data including the process data and other plant data from the production process data storage unit 41, the quality management data storage unit 42, and the production management data storage unit 43. The mapping unit 12 converts data format, the data pattern and the data status of each piece of process data collected by the data collecting unit 11 with the data format, the data pattern and the data status determined by the analysis device 1.

The cleansing unit 16 performs a data cleansing of the process data. The analyzing unit 13 executes process analysis based on the data via the mapping unit 12 or the cleansing unit 16. The analysis knowhow storage unit 14 stores an analysis logic used for analysis of the analyzing unit 13 and analytic results for the analysis of the analyzing unit 13.

The display control unit 15 controls the display unit 17. The display unit 17 displays an analysis screen including a group of screen images at the time that the analyzing unit 13 performs analysis. The input unit 8 receives instructions and analysis logic that is input by an operator.

The analysis device 1. may be separated into an analysis server and an analysis client. The analysis server may include the data collecting unit 11, the mapping unit 12, the analysis knowhow storage unit 14, and the cleansing unit 16. The analysis client may include the control unit 4, the input unit 8, the analyzing unit 13, the display control unit 15, and the display unit 17.

Next, operations of the process analysis system in accordance with the first preferred embodiment of the present invention will be described.

The production process data storage unit 41 stores the history data through the control device 3. The history data includes the process data and process alarm data, which may be obtained from the plant 100, and operation manipulation data representing contents of the operation preformed by the manipulation monitoring device 2.

The quality management data storage unit 42 stores data for quality management of products produced by the plant 100. The production management data storage unit 43 stores data for production management of the plant 100.

The data collecting unit 11, the mapping unit 12 and the analyzing unit 13 receive an instruction of an operator of the production improvement work, which are performed in cooperation with the display control unit 15. The data collecting unit 11, the mapping unit 12, the analyzing unit 13, the display unit 17 and the input unit 8 execute a series of processes required for analysis of the plant.

The data collecting unit 11 collects history data, quality management data and production management data respectively from the production process data storage unit 41, the quality management data storage unit 42 and the production management data storage unit 43. The data collecting unit 11 has an interface function for allowing access to the production process data storage unit 41, the quality management data storage unit 42 and the production management data storage unit 43.

The mapping unit 12 converts the data format, the data pattern and the data status of each data collected by the data collecting unit 11 with the data format, the data pattern and the data status decided by the analysis device 1. In this way, though the production process data storage unit 41, the quality management data storage unit 42 and the production management data storage unit 43 have different data formats, data patterns, and data status, the data format or the like of the obtained data may be converted to those decided by the analysis device 1. For this reason, all of the obtained data may be used for process analysis regardless of original data format or the like. An operator may perform analysis without considering the source of the collected data.

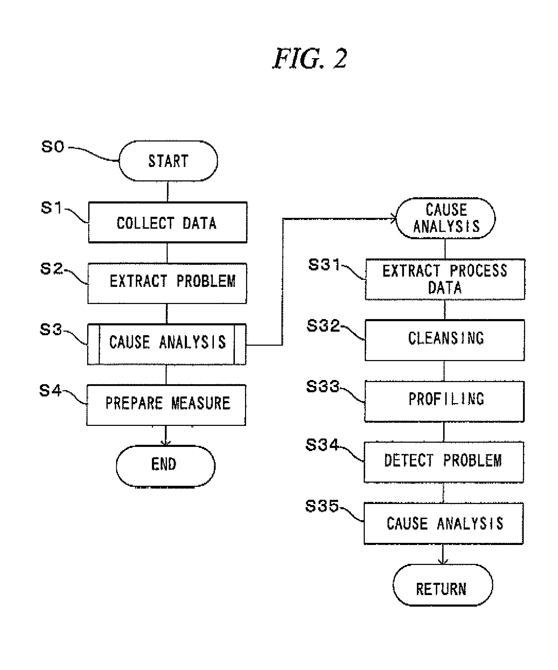

FIG. 2 is a flowchart illustrating a flow of works in the process analysis in accordance with the first preferred embodiment of the present invention. Hereinafter, operations at process analysis will be described.

In the process analysis, an "analyzer client screen" is displayed on the analysis screen 5 that is the target of works, by means of the display control unit 15. As described later, in the process analysis system in accordance with the first preferred embodiment of the present invention, individual analysis processes are integrated for each single tab sheet on the screen. A screen mode in which necessary functions of each analysis process are integrated may be selected by manipulating the tabs on the screen. The tab sheets are arranged in a line based on the order of analysis. All works required for the process analysis may be executed by selecting the screen modes in order.

In Step S0 an operator in charge of the production improvement work collects necessary data from the production process data storage unit 41, the quality management data storage unit 42 and the production management data storage unit 43 by means of the data collecting unit 11. In this way, the operator of the production improvement work extracts a problem. When extracting a problem, for example an "analyzer client screen" for comparison of the collected data for each lot is used as the analysis screen 5.

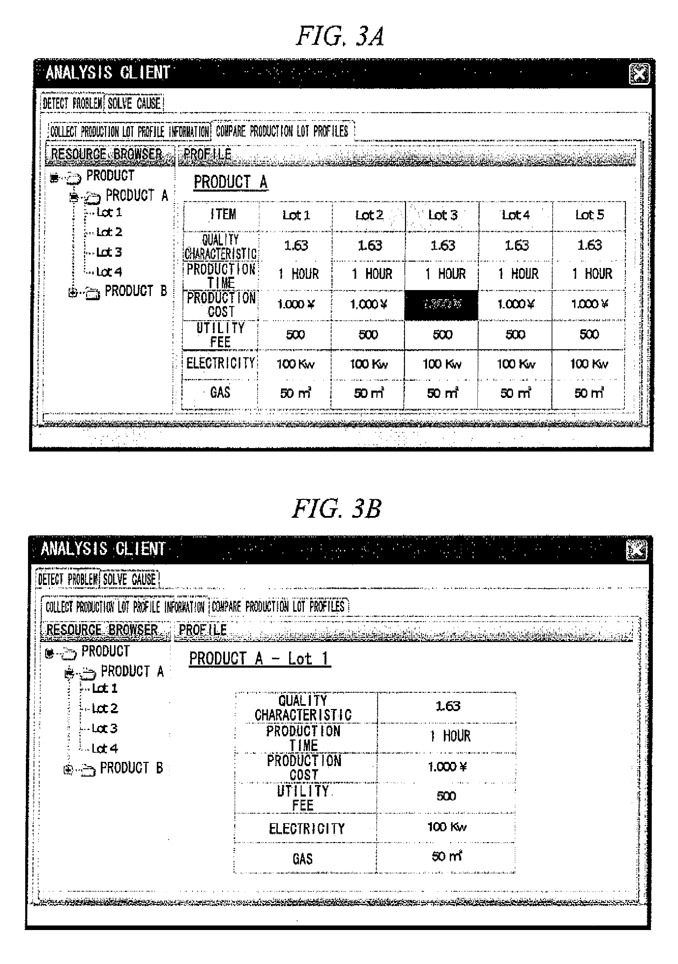

FIG 3A is a view illustrating an example of the "analyzer client screen" used when extracting a problem. FIG. 3A shows an example displaying a table in which quality characteristics, production time and production cost of the same product are compared for each lot. This example shows that the product cost of a lot expressed as "Lot3" is higher than those of other lots, and this lot has a problem, FIG. 3B is a view illustrating an example of the "analyzer client screen" used when extracting a problem. FIG 3B shows an example displaying quality characteristics, production time, production cost, and so on of a product with respect to "Lot1". An operator in charge of the production improvement work may extract a problem by using the "analyzer client screen" as shown in FIGS. 3A and 3B.

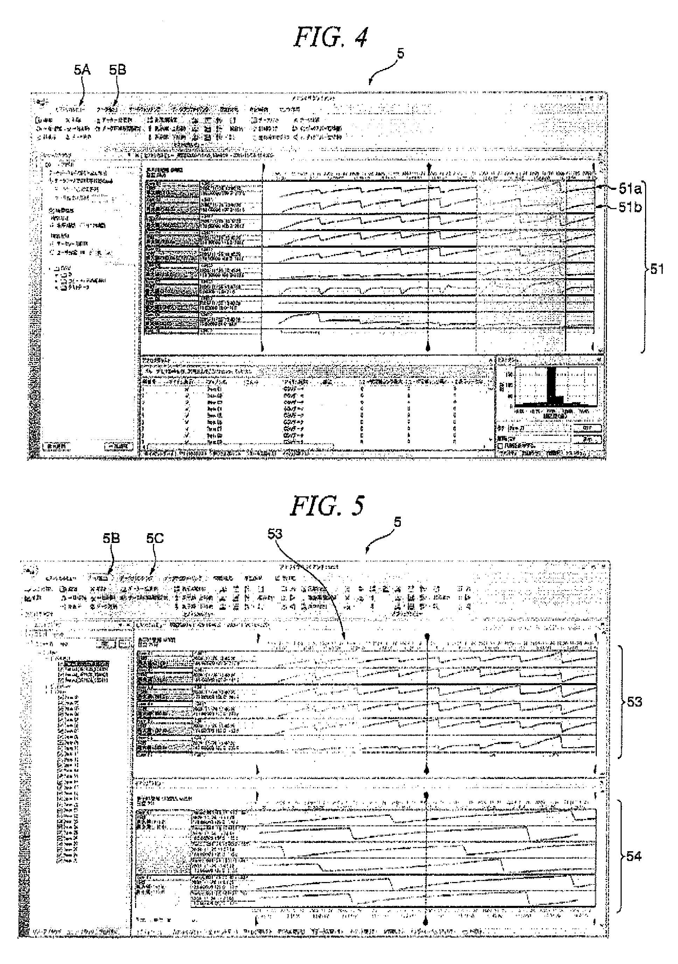

In Step S1, the operator of the production improvement work collects data necessary to analyze the extracted problem by means of the data collecting unit 11. FIGS. 4 to 9 illustrate an example of the displayed analysis screen 5. The analysis screen 5 includes a plurality of tab sheets such as a tab sheet of "historical view", a tab sheet of "data extraction", a tab sheet of "data cleansing", a tab sheet of "data profiling", a tab sheet of "problem detection", and a tab sheet of "cause analysis". FIG. 4 is a view illustrating an example of a display screen of a tab sheet of "historical view". The "historical view" displays a list of the collected data.

As shown in FIG. 4, if the tab 5A of the "historical view" of the analysis screen 5 is manipulated, the tab sheet of the "historical view" is developed. By manipulating the tab sheet of the "historical view", the operator may instruct collection of data to be acquired for analysis. According to this instruction, the data collecting unit 11 collects data, and the mapping unit 12 unites the data format. In a region 51 of the analysis screen 5, a trend of a data group, which is a process data group in the example of FIG. 4, designated as a display target among the collected data groups is graphically displayed.

The process data selected and collected as a target of analysis with the screen mode of the historical view" is continually used as a working target described below. Thus, there is no need to newly collect data for each analysis process.

As described above, in the screen mode of the "historical view" shown in FIG. 4, history data acquired from the production process data storage unit 41 may be selected at random, and then the trend thereof may be displayed on the screen. For example, in FIG. 4, trend graphs 51a, 51b, ... of individual process data are displayed in a line in the region 51 of the tab sheet of the "historical view". Each trend graph has a lateral axis of time and a vertical axis of process values, so that the lateral axis may be regularly arranged at the same time.

In Step S2, the operator of the production improvement work may extract a problem by looking at this trend graph of history data. If a region that is likely to have a problem is found, the operator of the production improvement work shifts to a cause analysis work of the step S3.

In Step S31 of the cause analysis work, firstly, a process data that is a target of analysis is extracted. FIG. 5 is a view illustrating an example of a display screen of a tab sheet of "data extraction". In a case that a region or, a time band that is likely to have a problem is found, if the tab 5B of the "data extraction" in the screen of the "historical view" shown in FIG. 4 is manipulated, the tab sheet of "data extraction" is developed as shown in FIG. 5, so that the display of the region 51 of the tab sheet of "historical view" in FIG 4 is transferred to a region 53 of the tab sheet of "data extraction".

In the screen mode of "data extraction", as shown in FIG. 5, a time band 53a may be designated in the region 53 of the screen of the "data extraction", so that a corresponding process data is extracted by designation of the time band 53a. A trend graph of the extracted process data, that is, a trend graph corresponding to the designated time band 53a is displayed in a region 54 of the tab sheet of "data extraction". In the example of FIG. 5, a portion of a time band among the time band displayed in the region 53 is designated, so that the region 54 displays a graph in which a trend graph of the time band 53 a is extended in a direction of the lateral axis i.e., time axis.

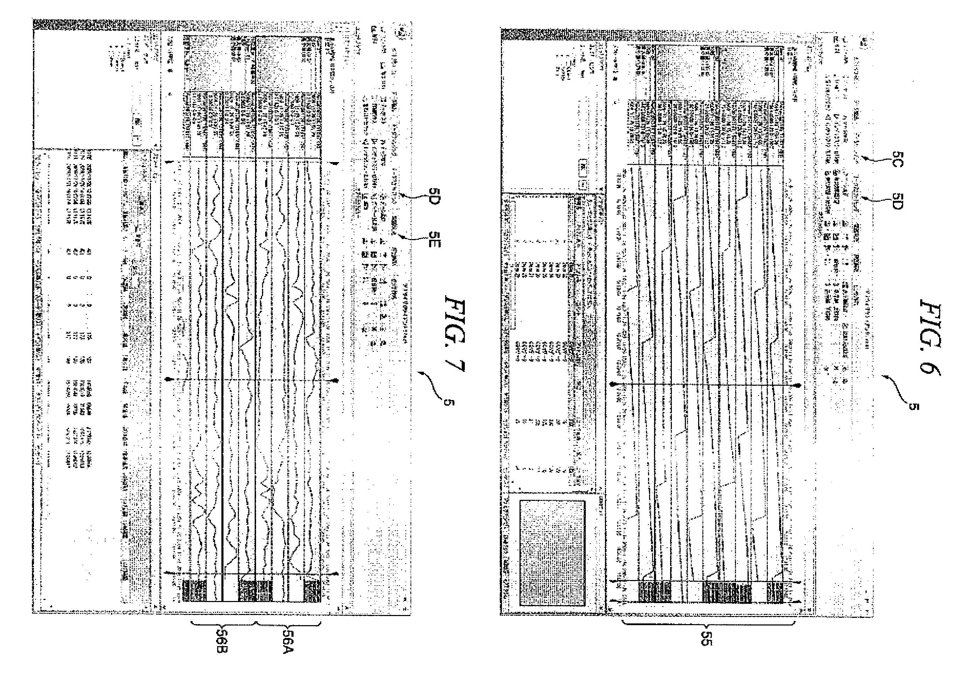

Then, in a state in which the process data is extracted by the above screen manipulation, if a tab 5C of "data cleansing" on the screen shown in FIG. 5 is manipulated, the tab sheet of "data cleansing" is developed as shown in FIG. 6, so that the display of the region 54 in FIG. 5 is transferred to a region 55. FIG. 6 is a view illustrating an example of a display screen of the tab sheet of "data cleansing",

In Step S32, in the screen mode of the "data cleansing" shown in FIG. 6, the process data used for analysis is cleansed. Here, for example, though the quality code of the acquired data is "bad" in aspect of the plant data management system or file, the data may be handled as a target of analysis by changing the code to "available" in the analysis. Also, though the quality code of the data is "good", the data may be excluded from a target of analysis by changing the code into "not available". In the example of FIG. 6, a time band 55a is designated as an invalid period so that data of the corresponding time band is excluded from a target of analysis.

As described above, in the process analysis system according to the first embodiment of the invention, the quality code or invalid period of the process data may be corrected at the time of analysis. In this way, the reliability of the process data used for analysis may be improved.

FIG. 7 is a view illustrating an example of a display screen of a tab sheet of "data profiling". After the data is completely cleansed, if a tab 5D of "data profiling" on the screen shown in FIG 6 is manipulated, a tab sheet of "data profiling" is developed as shown in FIG. 7, so that the display of the region 55 in FIG 6 is transferred to a region 56A of the tab sheet of "data profiling". However, FIG. 7 shows an example of processing other data than the data completely cleansed, for the convenience of explanation.

In Step S33, in the screen mode of "data profiling", the data that is a target of analysis is profiled. FIG. 7 shows an example in which frequency separation using "data moving average" is performed with respect to the process data whose trend graph is displayed in the region 56A. In FIG. 7, a low frequency region of the moving average of the data acquirable by frequency separation is displayed in a region 56B as a trend graph. The trend graphs of the regions 56A and 56B may use the lateral axis as a common time axis. By means of this frequency separation, a high frequency noise included in the trend of the process data is removed.

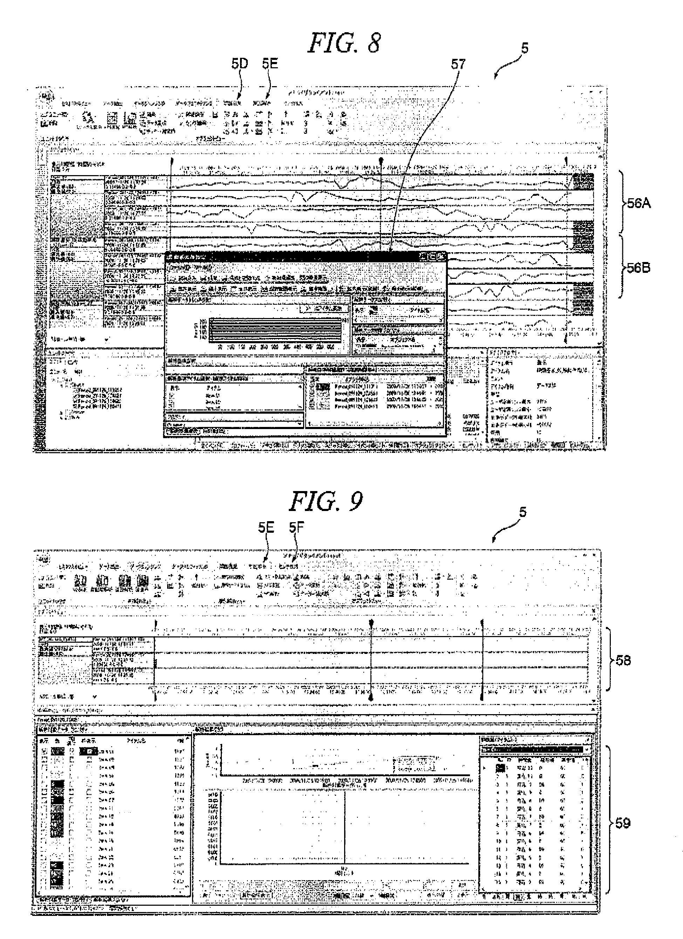

In Step S34, a work for detecting a problem is executed. FIG 8 is a view illustrating an example of a display screen of a tab sheet of problem detection". If a tab 5E of "problem detection" on the screen of FIG 7 is manipulated, the tab sheet of "problem detection" is developed as shown in FIG 8, so that the displays of the regions 56A and 56B are transferred thereto. Also, an analysis logic setting screen 57, which sets analysis logic, is newly developed and displayed.

In the screen mode of "problem detection", an analysis logic is set by means of the analysis logic setting screen 57 while referring to the trend graph of the process data. FIG 9 is a view illustrating an example of a display screen of a tab sheet of "cause analysis". If a tab 5F of the "cause analysis" on the screen is manipulated after setting the analysis logic, the tab sheet of "cause analysis" is developed as shown in FIG. 9, and an analysis result according to the analysis logic set in the analysis logic setting screen 57 is displayed. For example, a representative value of the analysis result is displayed in a region 58 of the tab sheet of "cause analysis" of FIG. 9. Detailed data of the analysis result is displayed in a region 59 of the tab sheet of "cause analysis". If the analysis logic is appropriate, it is possible to specify a time band or the like at which a problem occurs in regard to variation in quality or production cost.

In Step S35, the operator of the production improvement work may find an effective analysis logic in detecting a problem or specifying a cause by repeatedly setting analysis logics and referring to analysis results. A, display screen of the analysis results is preserved as display data, so that the display screen of the analysis results may be restored whenever it is read.

In a case that an effective analysis logic is established, in the process analysis system of this embodiment, the corresponding analysis logic may be registered as a "software sensor" and then stored in the analysis knowhow storage unit 14. If a tab 5G of "sensor making" on the screen shown in FIG. 9 is manipulated, a screen mode for making the corresponding analysis logic into a "software sensor" and then registering the "software sensor" is activated, and the corresponding analysis logic is stored in the analysis knowhow storage unit 14 as a software sensor. The software sensor stored in the analysis knowhow storage unit 14 may be acquired and reused for analysis by the analyzing unit 13 at any time.

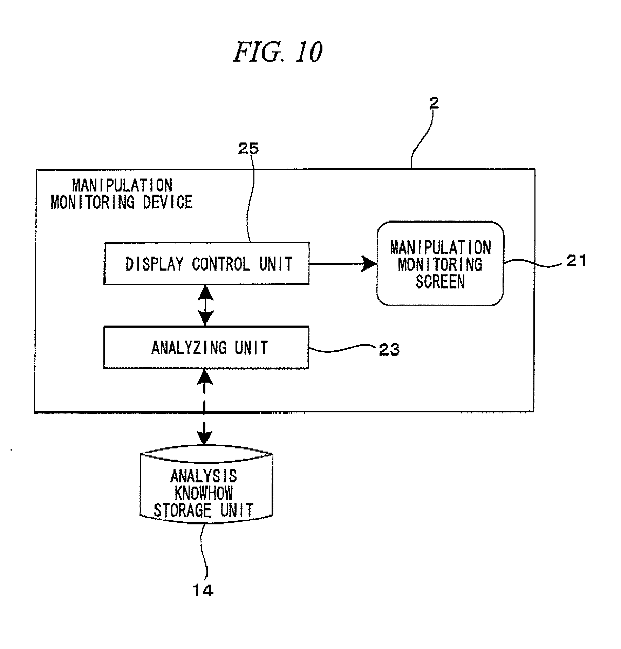

FIG 10 is a block diagram illustrating an example where an analyzing function is provided to the manipulation monitoring device. As shown in FIG. 10, the manipulation monitoring device 2 for manipulating and monitoring the plant may include an analyzing unit 23 and a display control unit 25. The analyzing unit 23 has the same function as the analyzing unit 13. The display control unit 25 has the same function as the display control unit 15. The display control unit 25 controls display of the manipulation monitoring screen 21. The manipulation monitoring device 2 acquires the software sensor stored in the analysis knowhow storage unit 14. In this way, the manipulation monitoring device 2 executes process analysis. An on-line analysis may also be executed by using the analysis logic. For example, it is also possible to monitor process data of a plane in real time by using the analysis logic and thus foresee the occurrence of an abnormal situation.

Hereinafter, an example of the display of analysis result will be described. In the screen mode of the "cause analysis" in FIG 9, analysis result, original process data or data such as key data KPI (Key Performance Indicator) obtained by processing the process data may be arranged and displayed in a graphical pattern such as respective trend graphs.

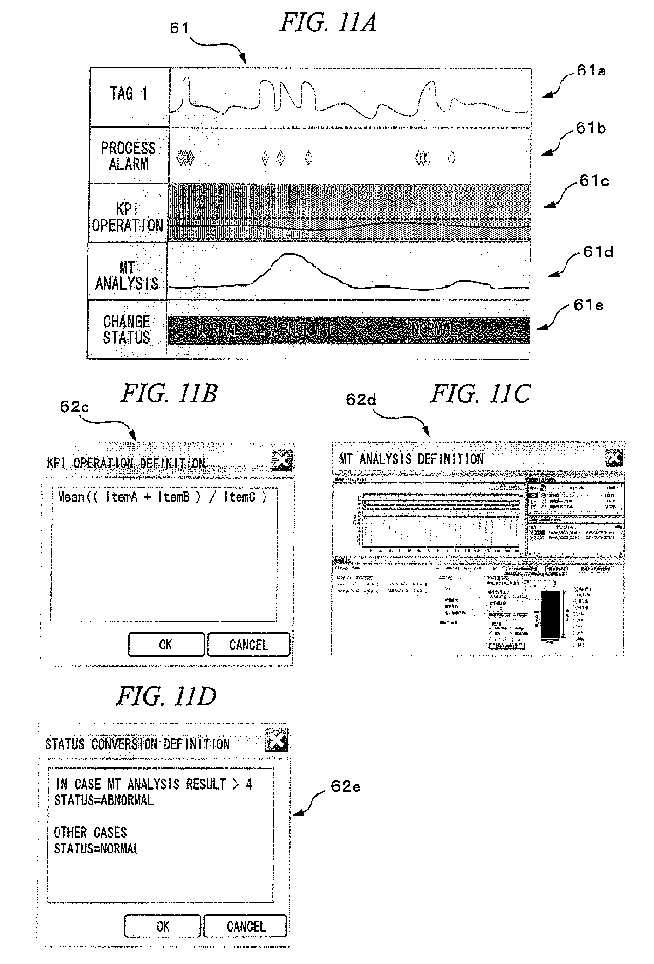

FIG. 11A is a view illustrating an example of a display screen, which shows an analysis result display screen. In the example of FIG. 11A, regions 61a to 61e are installed in an analysis result display screen 61. In the region 61a, a history of a value of a predetermined process data TAG1 is displayed. In the region 61b, an occurrence history of a predetermined process alarm is displayed. In the region 61c, a history of key data KPI defined by an operation expression using process data is displayed. In the region 61 d, an analysis result obtained by the MT method according to a predetermined definition is displayed. In the region 61e, a history of a status according to a predetermined definition is displayed. The displays of the regions 61a to 61e respectively represent history or analysis results by means of graphic display. The horizontal axis of the regions 61 a to 61e represents time that is common from regions 61a to 61e.

FIG 11B is a view illustrating an example of a display screen, which shows a KPI operation definition screen 62c. The KPI operation definition screen 62c defines an operation expression of the key data KPI displayed in the region 61c. The operator defines an operation expression of the key data KPI by means of the KPI operation definition screen 62c through the analysis device 1 or the manipulation monitoring device 2. This definition configures a part of the data of the software sensor, that is, a part of the analysis logic, so that it is stored in the analysis knowhow storage unit 14.

FIG. 11C is a view illustrating an example of a display screen, which shows an MT analysis definition screen 62d. The MT analysis definition screen 62d defines an analyzing method according to the MT method displayed in the region 61 d. The operator defines an analyzing method according to the MT method by means of the MT analysis definition screen 62d through the analysis device 1 or the manipulation monitoring device 2. This definition configures a part of the data of the software sensor, and it is stored in the analysis knowhow storage unit 14.

FIG 11D is a view illustrating an example of a display screen, which shows a status conversion definition screen 62e. The status conversion definition screen 62e defines contents of the status displayed in the region 61e. The operator defines contents of the status by means of the status conversion definition screen 62e through the analysis device 1 or the manipulation monitoring device 2. In the example of FIG 11D, it is defined that an analysis result according to the MT method analyzed according to the definition made by the MT analysis definition screen 62d is reflected in a status determining whether the analysis result is normal or abnormal.

The contents of the definition screens configure a part of the data of the software sensor, and it is stored in the analysis knowhow storage unit 14.

The above definition screens 62c to 62e may display data in a screen mode when setting an analysis logic shown in FIG. 8, and the definition screens 62c to 62e may allow the input of the contents of the definition screens by manipulating the definition screens. Also, by designating any one of the regions 61a to 61e by manipulation of the analysis result display screen 61, a definition screen 62c to 62e corresponding to the designated region may be displayed, and the contents of the definition screens may be edited by manipulating the definition screen. For example, if the region 61c is selected and an "edit button", which is not illustrated in the figure, on the screen is manipulated, the KPI operation definition screen 62c for defining an operation expression of the key data KPI expressed in the region 61c is displayed, so that the contents of the definition screens may be edited. The contents of the definition screens changed by the editing are reflected on the contents of the analysis screens of the analyzing unit 13 and the display control of the display control unit 15, so that the changed contents of the definition screens are immediately reflected on the analysis result display screen 61. Thus, when analysis is performed by using the analysis result display screen 61, a more suitable analysis method or condition may be found by editing the contents of the definition screens while checking the analysis result display screen 61.

The contents of the definition screens defined by using the definition screen shown in FIGS. 11B to 11D are registered as a software sensor or, preserved in the analysis knowhow storage unit 14. Also, by acquiring the registered software sensor a screen of a pattern corresponding to FIG. 11A using the contents of the definition screens may be displayed in the analysis device 1 or the manipulation monitoring device 2 and then used for analyzing a plant. In addition, by getting the registered software sensor, a screen displaying the contents of the definition screens itself, that is, a definition screen shown in FIGS. 11B to 11D or a screen displaying the contents equivalent to the definition screen, may be displayed on the screen of the analysis device 1 or the manipulation monitoring device 2. In this way, it is possible to freely refer to a logic or the like for analysis, which is registered as a software sensor.

In the example of FIG. 11A, an analysis result according to the MT method is used in determination of a status of whether the analysis result is normal or abnormal. At the time that it is recognized that this analysis logic or processing method is elective, the analysis logic or the like may be registered as a software sensor through the analysis device 1 or the manipulation monitoring device 2.

The above analysis logic may be defined, for example, using the following process or analyzing method.
(1) Frequency separation using "data moving average" or "difference between actual data and moving average"
(2) Conversion using the four fundamental arithmetic operations or logical operation
(3) Conversion using statistical treatment such as average, maximum and minium
(4) Multi-variable analysis such as multiple regression analysis
(5) Pattern recognition such as the Mahalanobis-Taguchi (MT) method
(6) Diagnosis based on operation results obtainable by the above (X) to (5): for example, if the operation value is 50 or more, it is determined to be normal, that is the quality is determined to be good, and if the operation value is less than 50, it is determined to be abnormal, that is the quality is determined to be bad.

The above treatments or analyzing methods may be combined suitably. For example, it is possible that the MT method is used based on the data in a low frequency range, obtained by frequency separation, to calculate a Mahalanobis distance. Further, it is possible to determine whether the analysis result is normal or abnormal, based on the calculated Mahalanobis distance.

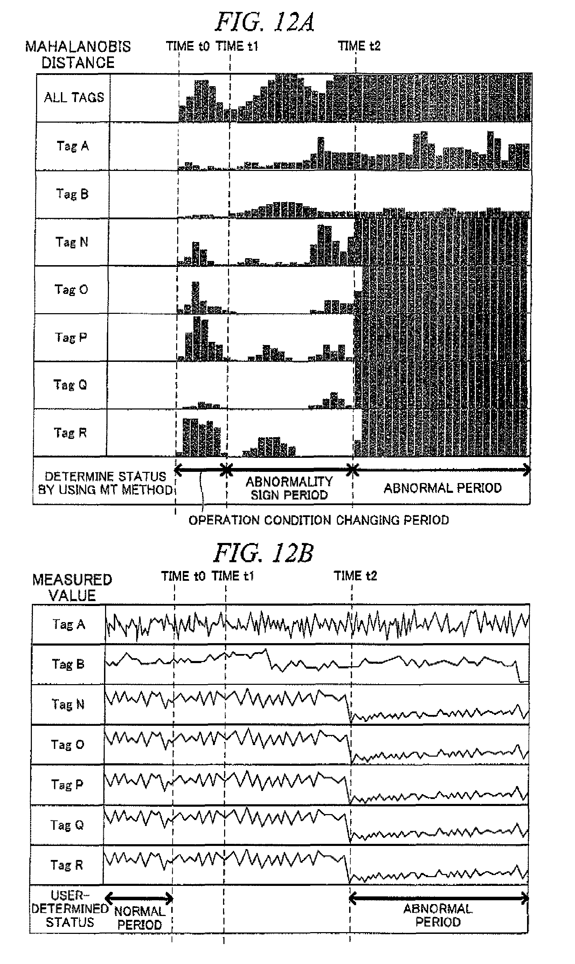

FIG 12A is a graph illustrating an example of an analysis result of the MT method. FIG. 12A illustrates an example of determining whether the analysis result is normal or abnormal based on the Mahalanobis distance. In FIG. 12A, whether the analysis result is normal or abnormal is determined according to the Mahalanobis distance at each tag or process data. The Mahalanobis distance represents the distance between a data group that is a target of analysis and a history data group determined to be normal. As the Mahalanobis distance increases, each tag status separated further from a normal pattern. In the example of FIG. 12A, the Mahalanobis distance of each tag A, B, N,... and the sum of the Mahalanobis distances "all tags" are defined. Whether the analysis result is normal or abnormal is determined based on the sum of the Mahalanobis distances. FIG 12B is a graph illustrating an example of an analysis result of the MT method. FIG. 12B illustrates the actual data of each tag. FIG. 12B shows an example displaying actual data of each tag in the same time band as FIG. 12A.

As shown in FIG. 12A, if the plant status is close to an abnormal state, the Mahalanobis distance is increased. For this reason, the occurrence of an abnormal situation may be detected only by checking the Mahalanobis distance, In the example of FIG. 12A, it may be determined that an abnormal situation occurs at a time t2. As shown in FIG. 12A, in a case that an operating condition is changed at a time t0, the Mahalanobis distance is decreased as a whole after the time t0 until a normal state may be obtained. Since the Mahalanobis distance is changed to have an increasing tendency at a time t1, it is possible to recognize a sign of an abnormal situation by checking this change. For this reason, before the time t2 when the status shows an abnormality, it is possible to foresee an occurrence of an abnormal situation.

As shown in FIG. 12B, if only the actual data of each tag is displayed on the screen as in a conventional system, an operator may not easily perceive a sign of an abnormal situation.

By applying the MT method as above, it is possible that the operator will foresee the occurrence of an abnormal situation at an early stage. Thus, it is possible to take rapid and accurate countermeasures for avoiding the occurrence of an abnormal situation.

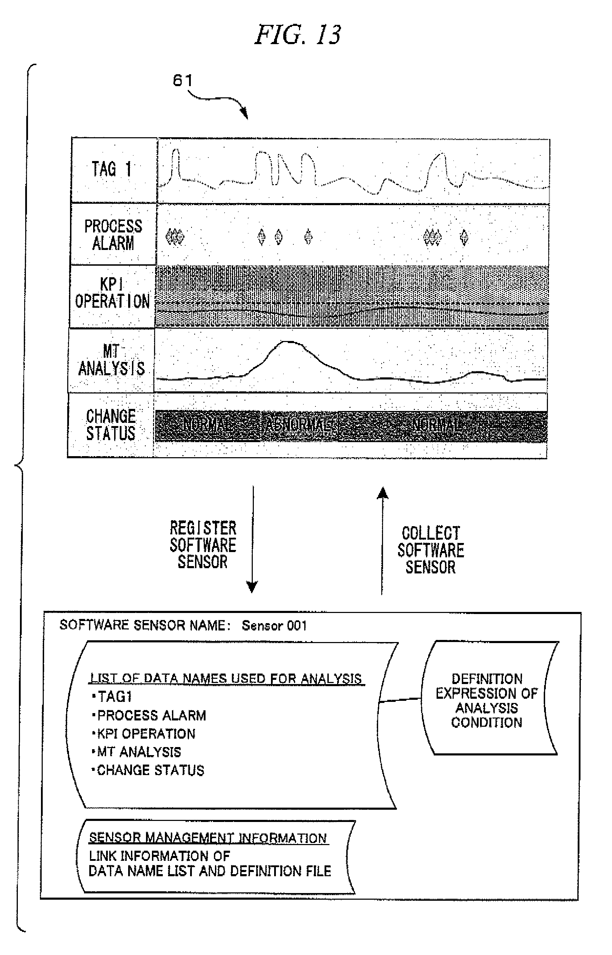

FIG. 13 is a view illustrating a correlation between the data structure of the software sensor and the analysis logic.

As shown in FIG. 13, the software sensor includes a list of data names used for analysis, and sensor management data that is link data among the analysis logic, data used for analysis, and definition files.

The list of data names in the software sensor and the analysis logic may be displayed on the screen of the analysis device 1 or the manipulation monitoring device 2. In this way, it is possible to directly understand the analysis logic. By registering the analysis logic as a software sensor, persons other than an analyzer may easily understand how the analysis is performed, by accessing the software sensor. In other words, the analysis knowhow may be passed on.

As described above, according to the plant analysis system in accordance with the first preferred embodiment of the present invention, all functions necessary for process analysis are integrated in one tool. Further, each analysis process is allocated in order to each screen mode, Thus, an analyzing order may be clearly understood. All works required for process analysis may be performed by selecting the screen modes in order. Since the process data subject to the work is maintained though the screen mode is changed, an excellent working efficiency can be obtained. Thus, the burden or time taken for the analyzing work may be decreased greatly.

Since the analysis logic of a plant may be registered as a software sensor, the analyzing method may be effectively reused. The analysis knowhow may be shared and passed on.

The scope of the invention is not limited to the preferred embodiments. The invention is directed to analyzing process data of a plant based on a predetermined analysis logic, so that the invention may be widely applied to a process analysis system that analyzes a process.

In the above-description, the display unit 17 was disposed in the analysis device 1, but the display unit 17 may be disposed outside of the analysis device 1.

"The mapping unit" in the above-described preferred embodiments of then present invention is an example of "a data formatting unit" in the claims. "The analysis knowhow storage unit" in the above-described preferred embodiments of the present invention is an example of "a storage unit" in the claims.

As used herein, the following directional terms "forward, rearward, above, downward, right, left, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A process analysis system comprising:
a data collecting unit that collects process data related to a plant;
an input unit that receives an analysis logic;
a first analyzing unit that performs a first analysis of the process data by using the analysis logic;
a storage unit that stores the analysis logic, which has been used by the first analyzing unit, so as to be reused by the first analyzing unit; and
a first display control unit that controls a display unit, the display unit displaying a group of screen images of a first analysis result of the first analysis so that the input unit can receive an instruction of performing a series of operations, and
wherein the series of operations are performed by the data collecting unit, the input unit, the first analyzing unit, the storage unit, and the display unit based on the instruction to at least one of the group of screen images.

2. The process analysis system according to claim 1, further comprising;
a control unit that controls the data collecting unit, the input unit, the first analyzing unit, the storage unit, and the first display control unit, the control unit controlling the series of operations.

3. The process analysis system according to claim 1, wherein the storage unit stores the first analysis result so as to be reused by the first analyzing unit.

4. The process analysis system according to claim 1, wherein the series of operations are performed by using the same process data or the same group of process data.

5. The process analysis system according to claim 1, further comprising:
a data cleansing unit that performs a data cleansing of the process data to generate cleansed process data, and
wherein the first analyzing unit perform the first analysis of the cleansed process data, and
wherein the data cleansing is performed based on the instruction to at least one of the group of screen images.

6. The process analysis system according to claim 1, further comprising:
a data formatting unit that performs a data formatting of the process data to generate formatted process data, the data formatting unifying a data format of the process data, and
wherein the first analyzing unit performs the first analysis of the formatted process data, and
wherein the data formatting is performed based on the instruction to at least one of the group of screen images.

7. The process analysis system according to claim 1, further comprising:
a manipulation monitoring device that receives the process data from the plant, the manipulation monitoring device receiving the analysis logic stored in the storage unit, the manipulation monitoring device comprising:
a second analyzing unit that performs a second analysis of the process data based on the analysis logic; and
a second display control unit that controls a display of a second analysis result of the second analysis.

8. The process analysis system according to claim 1, wherein
the analysis logic includes the Mahalanobis-Taguchi (MT) method.

9. A process analysis system comprising:
a data collecting unit configured to collect process data related to a plant;
a mapping unit configured to convert data format, data pattern and data status of each piece of the process data collected by the data collecting unit, the data format, the data pattern and the data status being determined by the process analysis system, the mapping unit generating converted process data;
a cleansing unit configured to perform data cleansing of the converted process data to generate cleansed process data;
a input unit configured to receive an analysis logic;
a first analyzing unit configured to perform a first analysis of the cleansed process data by using the analysis logic;
a storage unit configured to store the analysis logic, which has been used by the first analyzing unit, so as to be reused by the first analyzing unit;
a display unit configured to display a group of screen images of a first analysis result of the first analysis so that the input unit can receive a first instruction of performing a series of operations;
a first display control unit configured to control the display unit, and
wherein the series of operations are performed by the data collecting unit, the input unit, the first analyzing unit, the storage unit, and the display unit based on the first instruction.

10. The process analysis system according to claim 9, further comprising:
a control unit configured to control the data collecting unit, the analyzing unit, the input unit, the storage unit, and the display control unit, and
wherein the control unit controlling the series of operations.

11. The process analysis system according to claim 9, wherein the data cleansing is performed based on a second instruction received by the input unit.

12. The process analysis system according to claim 9, further comprising:
a manipulation monitoring device that receives the process data related to the plant, the manipulation monitoring device receiving the analysis logic stored in the storage unit, the manipulation monitoring device comprising:
a second analyzing unit configured to perform a second analysis of the process data based on the analysis logic; and
a second display control unit configured to control a display of a second analysis result of the second analysis.

13. The process analysis system according to claim 9, wherein
the analysis logic includes the Mahalanobis-Taguchi (MT) method.

14. A process analysis method comprising:
collecting process data of a plant;
receiving an analysis logic;
performing an analysis of the process data by using the analysis logic;
storing the analysis logic, which has been used in the analysis, so as to be reused in a next analysis; and
displaying a group of screens of an analysis result of the analysis so that an instruction of performing a series of operations can be received; and
wherein the series of operations are performed based on the instruction to at least one of the group of screens.

15. The process analysis method according to claim 14, wherein
the analysis logic includes the Mahalanobis-Taguchi (MT) method.
